# EUROPÄISCHE PATENTSCHRIFT

(11) **EP 3 680 112 B1**
(45) Veröffentlichungstag und Bekanntmachung des Hinweises auf die Patenterteilung: **31.01.2024**
(21) Anmeldenummer: 19214704.9
(22) Anmeldetag: 10.12.2019
(51) Int. Cl.: B42D 25/24, B42D 25/455, B42D 25/47, B29C 65/48

(54) **VERBUND AUS EINER TRÄGERFOLIE UND ZWEI KLEBESCHICHTEN, VERFAHREN ZUR HERSTELLUNG EINES HALBZEUGES MIT EINEM SOLCHEN VERBUND SOWIE HALBZEUG**
COMPOSITE CONSISTING OF A SUPPORT FILM AND TWO ADHESIVE LAYERS, METHOD FOR PRODUCING A SEMI-FINISHED PRODUCT COMPRISING SUCH A COMPOSITE AND SEMI-FINISHED PRODUCT
COMPOSITE À PARTIR D'UNE FEUILLE SUPPORT ET DEUX COUCHES ADHÉSIVES, PROCÉDÉ DE FABRICATION D'UN DEMI-PRODUIT DOTÉ D'UN TEL COMPOSITE ET DEMI-PRODUIT

(30) Priorität: 11.01.2019 DE 102019100629
(43) Veröffentlichungstag der Anmeldung: 15.07.2020
(73) Patentinhaber: Bundesdruckerei GmbH, 10969 Berlin (DE)
(72) Erfinder: Blurton, Sven, 12623 Berlin (DE); Antonczik, Boris, 16567 Schönfließ (DE)
(74) Vertreter: Mammel und Maser Patentanwälte PartG mbB

(56) Entgegenhaltungen:
- EP-A1- 0 054 155
- EP-A1- 3 375 623
- EP-A2- 1 603 757
- DE-A1-102005 052 925

## Beschreibung

Die Erfindung betrifft einen Verbund aus einer Trägerfolie und auf zwei auf jeweils gegenüberliegenden Seiten der Trägerfolie aufgebrachten Klebeschichten sowie ein Verfahren zur Herstellung eines Halbzeuges für ein buchartiges Dokument mit einem solchen Verbund sowie ein Halbzeug.

Aus der EP 1 603 757 A1 ist ein Verfahren zur Herstellung eines buchartigen Dokumentes mit einem Halbzeug in Form einer Buchdecke bekannt. Solche buchartigen Sicherheits- und/oder Wertdokumente, wie beispielsweise ein Reisepass, umfassen einen Bucheinband mit einer Buchdeckenvorderseite und einer Buchdeckenrückseite. Diese Buchdeckenvorderseite und die Buchdeckenrückseite umfassen wenigstens eine Buchdeckeneinlage, die an deren Außenseite beispielsweise einen Buchdeckeneinband aufweist. Der Buchdeckeneinband nimmt mehrere Datenseiten auf. Eine der Datenseiten kann auch als Personalisierdatenseite ausgebildet sein. Zur Herstellung eines solchen Wertdokumentes wird eine Buchdecke zur Bildung der Buchdeckenvorderseite und der Buchdeckenrückseite als Halbzeug bereitgestellt. Auf dieses Halbzeug wird ein fließfähiger Klebstoff aufgetragen, um beispielsweise einen Bucheinband oder einen Vorsatz durch eine klebende Verbindung mit der Buchdecke zu befestigen.

Zur Herstellung des Halbzeuges ist bislang der Klebstoff vollflächig auf die Oberfläche des kartenförmigen Rohlings aufgesprüht oder mittels Walze aufgetragen worden. Ein solcher vollflächiger Auftrag weist den Nachteil auf, dass bei nachfolgenden Bearbeitungsschritten durch Einwirkung von Druck und/oder Temperatur, um beispielsweise den Bucheinband an der Buchdecke zu fixieren, die Klebstoffschicht seitlich ausgedrückt wird. Dies führt zum Verkleben oder Verschmieren von weiteren Anlagenteilen.

Zur Herstellung eines solchen Halbzeuges ist auch bekannt, auf die Buchdecke oder den Vorsatz ein Appliziersegment aufzubringen, welches zumindest aus einer Klebeschicht besteht. Die auf das Halbzeug aufgebrachte Klebeschicht besteht aus einer Schmelzklebermasse, welche ab einem einstellbaren Aktivierungszeitpunkt einen Vernetzungsprozess startet, um eine klebende Verbindung mit einer weiteren Komponente zu schaffen. Eine solche reaktive Schmelzklebermasse auf einem Bucheinband oder eines Vorsatzes als Halbzeug ermöglicht, dass in einem separaten Arbeitsschritt solche Halbzeuge herstellbar und einer weiteren Produktion eines buchartigen Dokuments bedarfsmäßig zugeführt werden können.

Bei solchen reaktiven Schmelzklebermassen kann vor deren Bearbeitung mit weiteren Komponenten eine Temperatureinwirkung auf das Halbzeug stattfinden, welche den Vernetzungsprozess zumindest teilweise aktiviert. Dies weist den Nachteil auf, dass eine klebende Verbindung der bereits vernetzten Schmelzklebermasse mit einer weiteren Komponente nicht mehr erfolgt.

Aus der EP 2 873 708 B1 ist eine Klebstoffzusammensetzung mit zwei thermischen Farbumschlägen bekannt, wodurch eine verbesserte Sicherheit auf Basis der Farbänderungen in Abhängigkeit der Umgebungstemperatur eines Klebstoffs und einer Klebestelle ermöglicht ist.

Aus der DE 10 2006 042 488 A1 ist ein Kleb- oder Dichtstoff mit temperatursensiblen Farbstoffen bekannt. Mindestens eine farbgebende Komponente besteht aus einem organischen Farbstoff, der sich bei einer Temperatur im Bereich von 140 °C bis 210 °C zersetzt. Des Weiteren kann eine farbgebende Komponente vorgesehen sein, die sich in diesem Temperaturbereich nicht verändert.

Aus der EP 0 054 155 A1 ist des Weiteren ein Klebeverfahren mittels Schmelzklebstoff bekannt, welcher zumindest einen Thermochromfarbstoff enthält, welcher bei Erreichen der für die einwandfreie Benetzung erforderlichen Temperatur einen Farbumschlag in einem Temperaturbereich zeigt.

Aus der EP 3 375 623 A1 ist ein Verfahren zur Herstellung eines Halbzeuges sowie ein Halbzeug bekannt. Zur Herstellung eines Halbzeuges wird eine Klebstoffschicht als Materialbahn auf einer Trägerfolie bereitgestellt. Die Trägerfolie wird von der Klebstoffschicht abgehoben und einer Schneidstation zugeführt. Darauffolgend werden zugeschnittene Klebstoffschichten als Appliziersegment einem Transferband zugeführt. Auf das Appliziersegment wird ein Rohling zur Bildung eines Halbzeuges aufgebracht.

Dokument DE 10 2005 052 925 A1 offenbart einen Verbund aus einer Trägerfolie und aus einer auf einer Seite der Trägerfolie aufgebrachten Klebeschicht, wobei die Klebeschicht eine reaktive Schmelzklebermasse enthält, die mit temperaturempfindlichen, sich in der Farbe ändernden Pigmenten angereichert ist, welche durch einen Farbumschlag eine zumindest bereichsweise Erwärmung der Schmelzklebermasse auf deren Aktivierungstemperatur anzeigen.

Der Erfindung liegt die Aufgabe zugrunde, einen Verbund aus einer Trägerfolie und auf zumindest einer Seite der Trägerfolie aufgebrachten Klebeschicht sowie ein Verfahren zur Herstellung eines Halbzeuges für ein buchartiges Dokument mit zumindest einer Klebeschicht als auch ein Halbzeug mit zumindest einer Klebeschicht für ein buchartiges Dokument vorzuschlagen, bei welchem nachprüfbar ist, ob ein Vernetzungsprozess der reaktiven Schmelzklebermasse der Klebeschicht zumindest teilweise erfolgt ist.

Diese Aufgabe wird durch einen Verbund nach Anspruch 1 gelöst.

Dies weist den Vorteil auf, dass vor dem Auftragen des Verbundes oder der zumindest einen durch den Verbund bereitgestellten Klebeschicht auf eine Komponente, beispielsweise eines buchartigen Dokuments, insbesondere auf eine Buchdecke oder einen Vorsatz für einen Buchblock ohne Hilfsmittel geprüft werden kann, ob eine Aktivierung der Schmelzklebermasse bereits erfolgt ist. Eine solche einfache Sichtprüfung ermöglicht ein schnelles Aussortieren der Kleberschicht beziehungsweise der Komponente mit der darauf aufgebrachten Kleberschicht, bei der zumindest der Vernetzungsprozess aufgrund des Erreichens oder Überschreitens einer Aktivierungstemperatur bereits erfolgt ist, die für die Weiterverarbeitung nachteilig ist. Dadurch wird eine erhöhte Produktqualität geschaffen.

Bevorzugt ist die Schmelzklebermasse durch temperaturempfindliche Pigmente eingefärbt, welche bei Erreichen der Aktivierungstemperatur farblos umschlagen und farblos bleiben. Dadurch kann in einfacher Weise eine optische Erkennung geschaffen werden. Alternativ können zunächst die temperaturempfindlichen Pigmente farblos sein, die in der Schmelzklebermasse eingemischt sind und beim Erreichen der Aktivierungstemperatur sich verfärben und vorzugsweise eine charakteristische Farbe einnehmen. Auch können temperaturempfindliche Pigmente vorgesehen sein, die sich in der Farbe ändern.

Gemäß einer bevorzugten Ausgestaltung des Verbundes ist auf zumindest einer Seite der Trägerfolie die Klebeschicht aufgebracht und diese Klebeschicht von der Trägerfolie ablösbar. Somit kann bei der Weiterverarbeitung des Verbundes zur Herstellung eines Halbzeuges ausschließlich die Klebeschicht mit der Schmelzklebermasse auf die Komponente aufgebracht werden, wie beispielsweise auf eine Buchdecke oder einen Vorsatz.

Der Verbund besteht aus einer Trägerfolie, welche beidseitig mit der Klebeschicht beschichtet ist. Bei dieser Ausführungsform kann der Verbund vollständig auf die Komponente zur Herstellung des Halbzeuges aufgebracht sein. Bevorzugt weist bei dieser Ausgestaltung der Verbund eine Schichtdicke von weniger als 300 µm, vorzugsweise weniger als 200 µm, auf, sodass der komplette Verbund weiter verarbeitbar ist. Dies ermöglicht eine Vereinfachung in der Verarbeitung, da die Trägerfolie nicht abzunehmen ist.

Eine alternative Ausgestaltung des Verbundes sieht vor, dass die Trägerfolie auf der einen Seite die Klebeschicht aufnimmt, welche die reaktive Schmelzklebermasse enthält, die mit temperaturempfindlichen, sich in der Farbe ändernden Pigmenten angereichert ist und auf der gegenüberliegenden Seite eine Klebeschicht aufnimmt, welche im Ausgangszustand klebrig ist. Dies ermöglicht eine einfache Verarbeitung des Verbundes zur Herstellung eines Halbzeuges, bei welchem der Verbund mit der Klebeschicht, welche im Ausgangszustand klebrig ist, mit einer Komponente verbunden wird, sodass der Verbund daran haftet. Die gegenüberliegende nach außen gerichtete Klebeschicht bestehend aus der reaktiven Schmelzklebermasse kann dann zu einem späteren Zeitpunkt beim Laminieren mit zumindest einer weiteren Komponente aktiviert werden.

Die der Erfindung zugrundeliegende Aufgabe wird des Weiteren durch ein Verfahren nach Anspruch 4 gelöst.

Dadurch wird ein Halbzeug bestehend aus dem Rohling und der zumindest einen darauf aufgebrachten Klebeschicht mit der angereicherten reaktiven Schmelzklebermasse bereitgestellt, bei welcher vor der Weiterverarbeitung des Rohlings durch einen möglichen Farbumschlag der temperaturempfindlichen, sich in der Farbe verändernden Pigmente in der Schmelzklebermasse ein bereits beginnender oder erfolgter Vernetzungsprozess ersichtlich ist. In einfacher Weise ist zu erkennen, ob ein Vernetzungsprozess aufgrund einer Temperatureinwirkung, welche gleich oder höher als die Aktivierungstemperatur ist, stattgefunden hat. Dadurch kann eine schnelle optische Prüfung genügen. Dies kann durch ein Bedienpersonal oder durch einfache optische Sensoren erfolgen.

Der Verbund, welcher beidseitig zur Trägerfolie jeweils eine aufgebrachte Klebeschicht umfasst, wobei zumindest eine Klebeschicht eine reaktive Schmelzklebermasse mit temperaturempfindlichen, sich in der Farbe ändernden Pigmenten enthält, wird auf dem Rohling angeheftet. Der Verbund wird als Einheit verarbeitet und zur Fertigstellung des Rohlings eingesetzt. Dies kann insbesondere dann erfolgen, wenn die Komponenten ein größeres Aufbaumaß beziehungsweise eine Schichtdicke ermöglichen.

Bevorzugt wird zur Vorfixierung des Verbundes auf dem Rohling zumindest eine punktförmige oder linienförmige oder strichlinienförmige Anheftstelle eingebracht. Beispielsweise kann die zumindest eine Anheftstelle durch einen Heizstempel oder ein Heizschwert eingebracht werden. Die Anheftung erfolgt bevorzugt unterhalb der Vernetzungstemperatur der Schmelzklebermasse. Alternativ kann vorgesehen sein, dass die zumindest eine Anheftstelle als flächige Anheftung ausgebildet wird. Es können eine oder mehrere flächige Anheftungen vorgesehen sein. Auch kann eine Kombination von punkt-, linien- oder strichlinienförmigen Anheftstellen und flächigen Anheftstellen ausgebildet werden.

Des Weiteren wird der Verbund auf das Format des Rohlings oder auf ein Untermaß zum Rohling zugeschnitten und darauffolgend einzelne Appliziersegmente bestehend aus dem Verbund auf den Rohling angeheftet oder aufgeklebt. Dadurch kann in einer einzelnen Applizierstation nach Zuführung des Rohlings das Halbzeug hergestellt werden.

Alternativ kann der Verbund als bahnförmiges Material bereitgestellt und von einer Rolle abgezogen sowie einem Transportband zugeführt werden, durch welches darauf aufliegende Rohlinge bereitgestellt werden, um darauffolgend den Verbund mit den kartenförmigen Rohlingen durch die zumindest eine Anheftstelle zu verbinden und anschließend durch einen Schneid- und/oder Stanzprozess zu vereinzeln.

Beim vorbeschriebenen Verfahren wird der Rohling als Buchdecke für einen Bucheinband eines buchartiges Wert- und/oder Sicherheitsdokumentes oder ein Vorsatz eines Buchblockes für ein buchartiges Wert- und/oder Sicherheitsdokument oder ein Teil einer Datenseite oder Personalisierdatenseite oder ein Teil einer Innenseite für ein buchartiges Wert- und/oder Sicherheitsdokument bereitgestellt. Sofern der Rohling als eine Buchdecke vorgesehen ist, kann der Rohling als kartenförmiger Rohling oder als Rohling aus Pappe bestehen oder aus Kunststoff, der erhöhte Steifigkeit aufweist. Auch kann der Rohling für eine Buchdecke als flexible Papierschicht und/oder Kunststoffschicht ausgebildet sein.

Die der Erfindung zugrundeliegende Aufgabe wird des Weiteren durch ein Halbzeug nach Anspruch 10 gelöst.

Die auf dem Rohling angeordnete Klebeschicht kann nur bereichsweise durch die zumindest eine Anheftstelle verbunden sein. Sofern die Temperatureinwirkung auf die Klebeschicht, welche temperaturempfindliche, sich in der Farbe ändernde Pigmente enthält, eine Aktivierungstemperatur der reaktiven Schmelzklebermasse noch nicht erreicht hat, findet ein Farbumschlag der temperaturempfindlichen Pigmente nicht statt. Sofern eine Temperatureinwirkung zumindest die Aktivierungstemperatur der reaktiven Schmelzklebermasse erreicht oder überschritten hat, ist ein Vernetzungsprozess der reaktiven Schmelzklebermasse gestartet und ein Farbumschlag der temperaturempfindlichen Pigmente erfolgt. Ein solcher Farbumschlag kann von farblos in eine bestimmte Farbe erfolgen. Auch kann der Farbumschlag von farblos in eine Farbe erfolgen. Ebenso ist möglich, dass der Farbumschlag von einem ersten Farbton in einen weiteren Farbton einstellbar ist. Dadurch wird schnell erkennbar, ob das Halbzeug zur Weiterverarbeitung verwendet werden kann oder einen Ausschuss darstellt.

Eine erste bevorzugte Ausführungsform sieht vor, dass das Halbzeug eine Klebeschicht umfasst, bei der die reaktive Schmelzklebermasse temperaturempfindliche, sich in der Farbe ändernde Pigmente enthält, die durch zumindest eine Anheftstelle fixiert sind. Dadurch können im Aufbau sehr dünne Halbzeuge hergestellt werden.

Alternativ kann das Halbzeug aus dem Rohling mit einem Verbund aus einer Trägerfolie und beidseitig auf der Trägerfolie aufgebrachten Kleberschichten mit jeweils einer reaktiven Schmelzklebermasse bestehen, der mit zumindest einer Anheftstelle mit dem Rohling verbunden ist.

Des Weiteren kann alternativ das Halbzeug aus dem Rohling aus einem Verbund aus einer Trägerfolie und einer einseitig auf der Trägerfolie aufgebrachten Klebeschicht mit einer reaktiven Schmelzklebermasse, die mit temperaturempfindlichen, sich der in der Farbe ändernden Pigmenten angereichert ist, bestehen und eine weitere Klebeschicht auf der gegenüberliegenden Seite aufweisen, die im Ausgangszustand klebrig ist. Mit dieser Klebeschicht kann der Verbund auf dem Rohling aufgeklebt sein.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
Figur 1 eine schematische Ansicht eines buchartigen Dokumentes mit einem Datenträger,
Figur 2 eine perspektivische Ansicht einer ersten Ausführungsform eines Halbzeuges für ein buchartiges Dokument gemäß Figur 1,
Figur 3 eine schematische Seitenansicht einer ersten Ausführungsform eines Verbundes aus einer Trägerfolie mit einer Klebeschicht,
Figur 4 eine schematische Seitenansicht des Verbundes mit einer Trägerfolie und beidseitig aufgebrachten Klebeschichten,
Figur 5 eine perspektivische Ansicht einer alternativen Ausführungsform des Halbzeuges für ein buchartiges Dokument gemäß Figur 1, und
Figur 6 eine schematische Seitenansicht eines Herstellungsprozesses für ein buchartiges Dokument gemäß Figur 1.

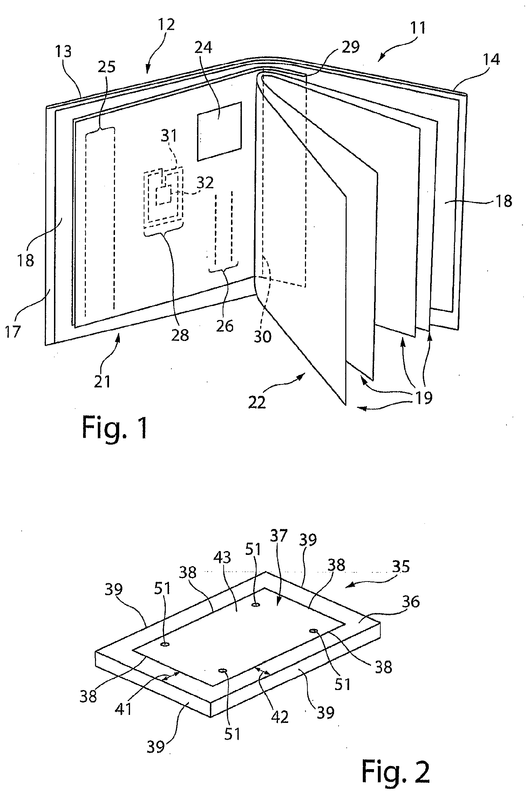

In Figur 1 ist ein buchartiges Dokument 11 dargestellt. Bei diesem buchartigen Dokument 11 handelt es sich beispielsweise um ein Wert- und/oder Sicherheitsdokument, insbesondere um einen Reisepass. Dieses Dokument 11 umfasst einen Bucheinband 12 mit einer Buchdeckenvorderseite 13 und einer Buchdeckenrückseite 14. Diese Buchdeckenvorderseite 13 und die Buchdeckenrückseite 14 umfassen wenigstens eine Buchdeckeneinlage, die an deren Außenseite beispielweise einen Buchdeckeneinband 17 aufweisen können, wobei an der jeweiligen Innenseite der Buchdeckenvorderseite 13 und Buchdeckenrückseite 14 ein Vorsatz 18 aufgebracht sein kann. Bevorzugt sind der Buchdeckeneinband 17 und der Vorsatz 18 durch Verklebung mit der zumindest einen Buchdeckeneinlage verbunden.

Der Bucheinband 12 nimmt mehrere Datenseiten 19 auf. Bevorzugt ist auch ein Datenträger 21, wie beispielsweise eine Personalisierdatenseite, vorgesehen. Die Datenseite 19 und/oder der Datenträger 21 und der Vorsatz 18 sind vorzugsweise zu einem Buchblock 22 miteinander verbunden und in dem Bucheinband 12 befestigt. Beispielsweise können die Datenseiten 19 und/oder der Datenträger 21 und der Vorsatz 18 durch eine Naht zu einem Buchblock 22 miteinander verbunden sein.

Der als Personalisierdatenseite ausgebildete Datenträger 21 ist beispielsweise gemäß ICAO-Standard ausgebildet und umfasst ein Bild 24 des Dokumenteninhabers, einen maschinenlesbaren Bereich 25 (MRZ) sowie weitere Personalisierdaten 26.

Der Datenträger 21 umfasst gemäß diesem Ausführungsbeispiel des Weiteren ein Transpondermodul 28, in welchem die Daten des Dokumenteninhabers und weitere Sicherheitsmerkmale abgespeichert sein können. Der Datenträger 21 ist beispielsweise als Einlegeblatt ausgebildet und kann gemäß dem Ausführungsbeispiel eine Lasche 29 umfassen, die sich über einen Nahtbereich 30 hinaus erstreckt. Alternativ kann anstelle der Lasche 29 eine vollständige Personalisier- oder Datenseite vorgesehen sein.

Der Datenträger 21 umfasst wenigstens zwei Kunststoffschichten, die miteinander laminiert sind und einen Folienverbund bilden. Dazwischenliegend ist das Transpondermodul 28 vorgesehen. Vorzugsweise kann zwischen den zumindest zwei äußeren Kunststoffschichten eine weitere Schicht, insbesondere aus Papier, eingebracht sein, welche die Personalisierdaten 26 sowie das Bild 24 und den maschinenlesbaren Bereich 25 umfasst. Bevorzugt sind die äußeren Kunststoffschichten aus Polycarbonat ausgebildet und umhüllen die innenliegende Schicht bevorzugt vollständig.

Das Transpondermodul 28 umfasst einen IC-Chip 32 sowie eine damit verbundene Antenne 31, welche aus mehreren Windungen besteht und vorzugsweise aufgedruckt sein kann.

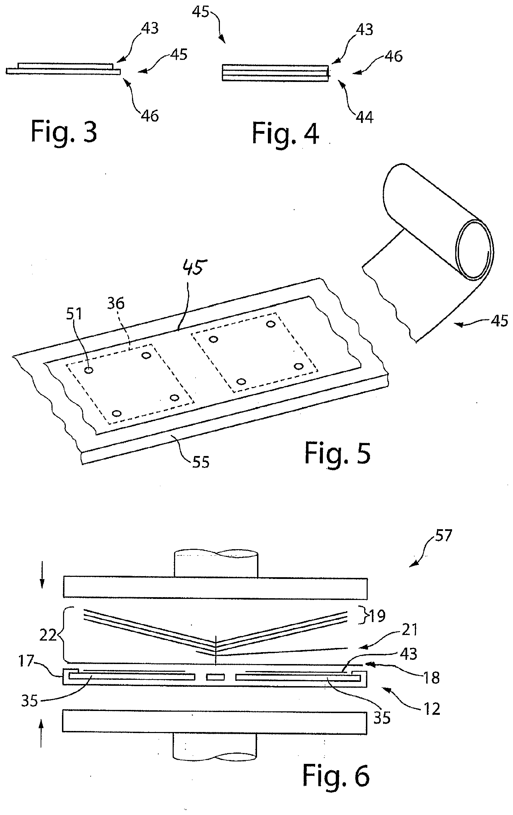

In Figur 2 ist ein Halbzeug 35 gemäß einer ersten Ausführungsform als Buchdecke perspektivisch dargestellt, welches zur Bildung einer Buchdeckenvorderseite 13 und/oder Buchdeckenrückseite 14 eingesetzt wird. Dieses Halbzeug 35 besteht aus einem kartenförmigen Rohling 36, welcher das Format des buchartigen Dokumentes 11 umfasst. Dieser kartenförmige Rohling 36 kann beispielsweise aus Pappe, Papier, Kunststoff und/oder einem Verbundmaterial aus einem der vorgenannten Materialien bestehen und sowohl einlagig als auch mehrlagig ausgebildet sein. Auf einer Seite des kartenförmigen Rohlings 36 ist ein Appliziersegment 37 aufgebracht, welches in diesem Ausführungsbeispiel aus einer Klebeschicht 43 eines Verbundes 45 gemäß der in Figur 3 dargestellten Ausführungsform besteht. Dieses Appliziersegment 37 kann eine Form aufweisen, welches dem Format des kartenförmigen Rohlings 36 entspricht. Dieses Appliziersegment 37 kann auch kleiner als das Format des kartenförmigen Rohlings 36 ausgebildet sein. Bevorzugt ist jede Seitenkante 38 des Appliziersegmentes 37 gegenüber einer Außenkante 39 des kartenförmigen Rohlings 36 nach innen zurückversetzt. Dadurch ist ein freier Randabschnitt 41, 42 am kartenförmigen Rohling gebildet, der frei von dem Appliziersegment 37 - also frei von einer Klebeschicht 43 - ist. Bevorzugt ist der Randabschnitt 41 entlang einer Längsseite des kartenförmigen Rohlings 36 gleich breit wie ein Randabschnitt 42 entlang einer Schmalseite des kartenförmigen Rohlings 36.

Das Appliziersegment 37 ist bevorzugt eine vollflächige Klebeschicht 43 auf dem kartenförmigen Rohling 36.

Dieses Appliziersegment 37 kann aus dem Verbund 45 gemäß Figur 3 herstellbar sein. Der Verbund 45 in Figur 3 stellt eine erste Ausführungsform dar. Dieser Verbund 45 besteht aus einer Trägerfolie 46, auf welcher einseitig die Klebeschicht 43 aufgebracht ist. Die Trägerfolie 46 kann aus einem oder mehreren Kunststoffen (Polymeren) hergestellt sein. Insbesondere bestehen diese aus Polycarbonat (PC). Weitere Alternativen können sein, Bisphenol-A-Polycarbonat, Carboxymodifiziertes PC, Polyethylenterephthalat (PET), dessen Derivaten wie Glycolmodifiziertem PET (PETG), Polyvinylchlorid (PVC), Polyvinylbutyral (PVB), Polymethylmethacrylat (PMMA), Polyimid (PI), Polybutylenterephthalat (PBT), Polyvinylalkohol (PVA), Polystyrol (PS), Polyvinylphenol (PVP), Polypropylen (PP), Polyethylen (PE), thermoplastischen Elastomeren (TPE), insbesondere thermoplastisches Polyurethan (TPU). Acrylnitril-Butadien-Styrol-Copolymer (ABS), und/oder deren Derivaten.

Die auf der Trägerfolie 45 aufgebrachte Klebeschicht enthält im Wesentlichen eine reaktive Schmelzklebermasse, insbesondere eine Heißschmelzklebermasse. In diese Schmelzklebermasse sind temperaturempfindliche, sich in der Farbe ändernde Pigmente eingebracht. Bevorzugt ist eine gleichmäßige Verteilung der Pigmente in die reaktive Schmelzklebermasse eingebracht.

Die temperaturempfindlichen, sich in der Farbe ändernden Pigmente sind auf eine Aktivierungstemperatur der reaktiven Schmelzklebermasse eingestellt. Bei Erreichen der Aktivierungstemperatur wird ein Vernetzungsprozess der reaktiven Schmelzklebermasse gestärkt. Ein Farbumschlag der Pigmente erfolgt bei einer Temperatur, die einer Aktivierungstemperatur der reaktiven Schmelzklebermasse entspricht oder geringfügig unterhalb dieser Aktivierungstemperatur liegt. Dadurch kann in einfacher Weise sichtbar gemacht werden, ob auf die Klebeschicht 43 eine Temperatureinwirkung stattgefunden hat, die ober- oder unterhalb der Aktivierungstemperatur liegt. Sofern die Temperatureinwirkung oberhalb der Aktivierungstemperatur liegt, wird der Vernetzungsprozess der Schmelzklebermasse gestartet, und diese Schmelzklebermasse reagiert aus. Darauffolgend ist eine Klebeverbindung mit einer weiteren Komponente beziehungsweise ein Anhaften an einer weiteren Komponente nicht mehr möglich.

Die Pigmente können einen Farbumschlag umfassen, welcher von farbig in farblos umschlägt. Auch können die Pigmente farblos vorliegen und in eine Farbe umschlagen. Des Weiteren können sich die Pigmente von einem ersten Farbton ändern und bei einer Temperatureinwirkung einen zweiten Farbton einnehmen.

Der Verbund 45 gemäß Figur 3 besteht bevorzugt aus einer bandförmigen Trägerfolie 46 und einer bandförmig aufgebrachten Klebeschicht 43. Diese Klebeschicht 43 kann in der Breite der Trägerfolie 46 entsprechend oder auch schmäler sein. Bevorzugt ist die Kleberschicht 43 als durchgehender Streifen auf der Trägerfolie 46 aufgebracht.

In einem nicht näher dargestellten Appliziersystem kann der Verbund 45 zugeführt werden, um diesen in einzelne Appliziersegmente 37 gemäß Figur 2 durch einen Schneid- und/oder Stanzprozess zu vereinzeln. Diese Appliziersegmente 37 können anschließend auf den kartenförmigen Rohling 36 aufgebracht und positioniert werden. Darauffolgend werden zur Vorfixierung des Appliziersegmentes 37 auf dem kartenförmigen Rohling 36 Anheftstellen 51 eingebracht, um ein Anbinden der Klebeschicht 43 an den kartenförmigen Rohling zu erzielen. Diese Anheftstellen 51 können mit einem Heizstempel oder einem Heizschwert erfolgen. Bevorzugt sind punktförmige Anheftstellen 51 vorgesehen. Diese können auch linienförmig oder strichlinienförmig oder eine Kombination davon sein. Die Anheftung der Klebeschicht 43 über die Anheftstellen 51 zum kartenförmigen Rohling 36 erfolgt bevorzugt unterhalb der Aktivierungstemperatur der reaktiven Schmelzklebermasse der Klebstoffschicht 43. Darauffolgend kann die Trägerfolie 46 von der Klebeschicht 43 abgehoben beziehungsweise abgezogen werden.

Auch kann vor oder nach dem Schneid- und/oder Stanzprozess des Verbundes 45 zur Herstellung der Appliziersegmente 37 die Trägerfolie 46 von der Klebeschicht 43 abgenommen und nur die Klebeschicht 43 als Appliziersegment auf den kartenförmigen Rohling 36 aufgebracht sein.

Das Halbzeug 35 kann gemäß einer weiteren Ausführungsform als ein Vorsatz 18 ausgebildet sein. Dieser Vorsatz 18 kann aus Papier, Kunststoff und/oder einem Verbundmaterial ausgebildet sein. Die vorstehenden Ausführungen zur Buchdecke gelten analog für den Vorsatz 18.

Des Weiteren kann gemäß einer alternativen Ausführungsform des Halbzeugs 35 vorgesehen sein, dass dieses als Teil einer Datenseite 19 oder als Teil eines Datenträgers 21 bzw. einer Personalisierdatenseite 21 ausgebildet ist. Der Rohling 36 für die Datenseite 19 und/oder den Datenträger 21 kann aus einer mehreren Schichten aus Papier, Kunststoff und/oder einem Verbundmaterial aus einem der vorgenannten Materialien bestehen.

In Figur 4 ist eine schematische Seitenansicht einer alternativen Ausführungsform des Verbundes 45 zu Figur 3 dargestellt. Dieser Verbund 45 umfasst eine Trägerfolie 46, welche dem Verbund 45 gemäß Figur 3 entsprechen kann. Beidseitig zur Trägerfolie 46 sind Klebeschichten 43 aufgebracht. Diese Klebeschichten 43 können gleich sein. Diese Klebeschichten 43 können die reaktive Schmelzklebermasse enthalten, die mit temperaturempfindlichen, sich in der Farbe ändernden Pigmenten angereichert sind.

Alternativ kann nur eine der beiden Klebeschichten 43 die reaktive Schmelzklebermasse mit den temperaturempfindlichen, sich in der Farbe ändernden Pigmenten umfassen. Die gegenüberliegende Klebeschicht 44 kann als Klebstoffschicht, wie beispielsweise Acrylat, Polyolefin, Vinylacetat oder Vinylacetat-Copolymer oder einem Polyurethan, bestehen, welches klebrig ist. Bei dieser Ausführungsform ist zur Herstellung des Halbzeuges 35 vorgesehen, dass aus dem Verbund 45 im Appliziersystem ein Appliziersegment 37 geschnitten wird, wobei dieses Appliziersegment 37 mit der klebrig ausgebildeten Klebeschicht 44 zum Rohling 36 weisend aufgebracht wird. Eine vollflächige Anhaftung des Verbundes 45 an dem Rohling 36 kann erfolgen. Nach oben oder nach außen weisend ist die Klebeschicht 43 mit der reaktiven Schmelzklebermasse ausgerichtet, sodass kurz vor der Weiterverarbeitung des Halbzeuges 35 ersichtlich ist, ob bei dieser nach außen weisenden Klebeschicht 43 der Vernetzungsprozess gestartet wurde.

Bei der Ausgestaltung des Verbundes 45 mit der Trägerfolie 46, welche beidseitig Klebeschichten 43 bestehend aus Schmelzklebermasse mit darin angereicherten temperaturempfindlichen, sich in der Farbe ändernden Pigmenten umfasst, entspricht die Breite der Trägerfolie 46 bevorzugt der Breite der Klebstoffschichten 43. Beidseitig sind die Klebeschichten 43 bevorzugt vollflächig auf der Trägerfolie 46 aufgebracht. Nachdem durch das Appliziersystem der Verbund 45 auf ein Format geschnitten wurde, kann dieser im Gesamten dem kartenförmigen Rohling 36 zugeführt und durch zumindest eine Anheftstelle 51 fixiert werden.

In Figur 5 ist eine schematische Ansicht zur Darstellung einer alternativen Applizierung des Verbundes 45 zu Rohlingen 36 dargestellt. Auf einem Transportband 55 aufliegend sind Rohlinge 36 vorgesehen. Diese können unmittelbar aneinandergereiht oder mit Abstand zueinander auf dem Transportband 55 aufliegen. Der Verbund 45 wird als Rollenware bereitgestellt. Das bahnförmige Material des Verbundes 45 wird den Rohlingen 36 zugeführt. Darauffolgend wird der Verbund 45 durch eine oder mehrere Anheftstellen 51 zu den Rohlingen 36 fixiert. Anschließend kann in einer nicht näher dargestellten Schneid- und/oder Stanzstation der angeheftete Verbund 45 mit dem Rohling 36 vereinzelt werden. Sofern bei der vorstehend beschriebenen Art zur Aufbringung des Verbundes 45 auf die Rohlinge 36 ein Verbund 45 mit einer nur einseitig auf der Trägerfolie 36 aufgebrachten Kleberschicht 43 zugeführt wird, kann die Trägerfolie 36 vor dem Anheften der Klebeschicht 43 an dem Rohling 36 entfernt und abgeführt werden oder nach dem Einbringen der Anheftstellen 51 abgezogen oder nach dem Vereinzeln entfernt werden.

Sofern ein Verbund 45 gemäß der Ausführungsform in Figur 4 den Rohlingen 36 zugeführt wird, verbleibt der Verbund 45 in dem vorbestimmten Format bevorzugt vollständig auf dem Rohling 36.

In Figur 6 ist eine schematische Seitenansicht eines letzten Arbeitsschrittes für die Herstellung eines buchartigen Dokumentes 11 dargestellt. In diesem dargestellten Arbeitsschritt gemäß Figur 6 erfolgt ein Laminieren, um einen Buchblock 22 mit dem Bucheinband 12 zu verbinden. Der Bucheinband 12 umfasst das Halbwerkzeug 35 zur Bildung der Buchdeckenvorderseite 13 und der Buchdeckenrückseite 14. Dazwischenliegend kann für den Falz ein weiteres Element eingebracht sein. Ein jeweiliges Halbwerkzeug 35 ist mit dem Bucheinband 17 vorzugsweise durch Verkleben verbunden.

Zum Vorsatz 18 des Buchblocks 22 weisend ist die Klebeschicht 43 des Verbundes 45 am Halbzeug 35 ausgerichtet. Durch das Laminierwerkzeug 57 wird eine Aktivierungstemperatur eingebracht, durch welche der Vernetzungsprozess der reaktiven Schmelzklebermasse auf dem Halbzeug 35 gestartet wird, um eine dauerhafte Bindung zwischen dem Vorsatz 18 und dem Bucheinband 12 zu schaffen.

Durch den Verbund 45 sowie das Halbzeug 35, bei welchen die zumindest eine Klebeschicht 43 eine reaktive Schmelzklebermasse enthält, die mit temperaturempfindlichen, in der Farbe sich ändernden Pigmenten angereichert ist, kann während mehreren aufeinanderfolgenden Verarbeitungsschritten in einfacher Weise kontrolliert und überwacht werden, ob bereits ein Vernetzungsprozess dieser Klebeschicht 43 gestartet wurde. Beispielsweise kann vor der Herstellung des Bucheinbandes 12 eine Sichtprüfung des Halbzeuges 35 erfolgen. Ebenso kann diese Sichtprüfung nach der Herstellung des Bucheinbandes 12 erfolgen, nachdem die Halbzeuge 35 mit dem Buchdeckeneinband 17 verklebt sind. Ebenso kann eine optische Prüfung vor dem in Figur 6 dargestellten Laminierschritt erfolgen.

Analoges gilt, sofern die Klebeschicht 43 bestehend aus einer reaktiven Schmelzklebermasse mit temperaturempfindlichen, sich in der Farbe ändernden Pigmenten an dem Vorsatz 18 vorgesehen ist. Ebenso kann dies beim Aufbau einer mehrschichtigen Datenseite oder einer mehrschichtigen Innenseite von Vorteil sein, wobei an einer Schicht vor dem Zusammenführen mit einer weiteren Schicht eine reaktive Schmelzklebermasse mit temperaturempfindlichen, sich in der Farbe ändernden Pigmenten vorgesehen ist.

### Bezugszahlenliste

| | | | |
|---|---|---|---|
| 11. | Buchartiges Dokument | 32. | Elektronisches Bauteil/IC-Chip |

| | | | |
|---|---|---|---|
| 12. | Bucheinband | 35. | Halbzeug |
| 13. | Buchdeckenvorderseite | 36. | Rohling |
| 14. | Buchdeckenrückseite | 37. | Appliziersegment |
| 17. | Buchdeckeneinband | 38. | Seitenkante |
| 18. | Vorsatz | 39. | Außenkante |
| 19. | Datenseite | 41. | Randabschnitt |
| 21. | Datenträger (Personalisierdatenseite) | 42. | Randabschnitt |
| 22. | Buchblock | 43. | Klebeschicht |
| 24. | Bild | 44. | Klebeschicht |
| 25. | Maschinenlesbarer Bereich | 45. | Verbund |
| 26. | Personalisierdaten | 46. | Trägerfolie |
| 28. | Transpondermodul | 51. | Anheftstelle |
| 29. | Lasche | 55. | Transportband |
| 30. | Nahtbereich | 57. | Laminierwerkzeug |
| 31. | Antenne | | |

## Patentansprüche

1. Verbund (45) als Appliziersegment (37) für ein Halbzeug (35) eines buchartigen Dokuments (11), wobei der Verbund aus einer Trägerfolie (46) und aus zwei auf jeweils gegenüberliegenden Seiten der Trägerfolie (46) aufgebrachten Klebeschichten (43,44) besteht, wobei eine Klebeschicht (43) eine reaktive Schmelzklebermasse enthält, die mit temperaturempfindlichen, sich in der Farbe ändernden Pigmenten angereichert ist, welche durch einen Farbumschlag eine zumindest bereichsweise Erwärmung der Schmelzklebermasse auf deren Aktivierungstemperatur anzeigen,
wobei
- entweder auf der Trägerfolie (46) beidseitig die Klebeschicht (43) vorgesehen ist, welche die reaktive Schmelzklebermasse mit temperaturempfindlichen, sich in der Farbe ändernden Pigmenten enthält, oder
- die Trägerfolie (46) auf der einen Seite die Klebeschicht (43) aufnimmt, welche die reaktive Schmelzklebermasse enthält, die mit temperaturempfindlichen, sich in der Farbe ändernden Pigmenten angereichert ist und auf der gegenüberliegenden Seite eine Klebeschicht (44) aufnimmt, welche im Ausgangszustand klebrig ist.

2. Verbund (45) nach Anspruch 1, **dadurch gekennzeichnet, dass** die Schmelzklebermasse durch die temperaturempfindlichen Pigmente eingefärbt und bei Erreichen der Aktivierungstemperatur der Heißschmelzklebermasse im Farbton veränderbar ist oder farblos umschlägt oder dass die temperaturempfindlichen Pigmente im farblosen Zustand angereichert sind und bei Erreichen der Aktivierungstemperatur in einen Farbton umschlagen.

3. Verbund (45) nach Anspruch 1 oder 2, **dadurch gekennzeichnet, dass** die Klebeschicht (43, 44) von der Trägerfolie (46) ablösbar ist.

4. Verfahren zur Herstellung eines Halbzeuges (35) für ein buchartiges Dokument (11), bei welchem ein Rohling (36) einem Appliziersystem zugeführt wird, wobei ein Verbund (45) aus einer Trägerfolie (46) und zwei auf jeweils gegenüberliegenden Seiten der Trägerfolie (46) aufgebrachten Klebeschichten (43, 44), wovon eine eine reaktive Schmelzklebermasse enthält, die mit temperaturempfindlichen, sich in der Farbe ändernden Pigmenten angereichert ist, durch zumindest eine Anheftstelle (51) oder durch Verklebung zum Rohling (36) fixiert wird,
wobei
- der Verbund (45) mit beidseitig zur Trägerfolie (46) vorgesehenen Klebeschichten (43, 44) auf den Rohling (36) angeheftet oder angeklebt ist, und
- wobei entweder auf der Trägerfolie (46) beidseitig die Klebeschicht (43) vorgesehen ist, welche die reaktive Schmelzklebermasse mit temperaturempfindlichen, sich in der Farbe ändernden Pigmenten, enthält, oder die Trägerfolie (46) auf der einen Seite die Klebeschicht (43) aufnimmt, welche die reaktive Schmelzklebermasse enthält, die mit temperaturempfindlichen, sich in der Farbe ändernden Pigmenten angereichert ist und auf der gegenüberliegenden Seite eine Klebeschicht (44) aufnimmt, welche im Ausgangszustand klebrig ist.

5. Verfahren nach Anspruch 4, **dadurch gekennzeichnet, dass** die zumindest eine Klebeschicht (43) des Verbundes (45) durch eine oder mehrere punktförmige, linienförmige und/oder strichlinienförmige Anheftstellen (51) zum Rohling (36) fixiert wird.

6. Verfahren nach einem der Ansprüche 4 bis 5, **dadurch gekennzeichnet, dass** die zumindest eine Anheftstelle (51) durch eine oder mehrere flächige Anheftungen ausgebildet wird.

7. Verfahren nach einem der Ansprüche 4 bis 6, **dadurch gekennzeichnet, dass** der Verbund (45) auf das Format des Rohlings (36) oder auf ein Untermaß zum Format des Rohlings (36) geschnitten und einzeln auf den Rohling (36) angeheftet oder aufgeklebt wird.

8. Verfahren nach einem der Ansprüche 4 bis 7, **dadurch gekennzeichnet, dass** der Verbund (45) als bahnförmiges Material dem zumindest einen Rohling (36) zugeführt und mit zumindest einer Anheftstelle (51) verbunden sowie darauffolgend in einem Schneid- und/oder Stanzprozess vereinzelt wird.

9. Verfahren nach einem der Ansprüche 4 bis 8, **dadurch gekennzeichnet, dass** der Rohling (36) als kartenförmiger Rohling für eine Buchdecke (13, 14) oder dass der Rohling (36) als eine Schicht für eine mehrschichtige Datenseite (19) oder eine mehrschichtige Personalisierdatenseite (21) oder ein Vorsatz (18) bereitgestellt wird.

10. Halbzeug für ein buchartiges Dokument, welches nach einem Verfahren gemäß den Ansprüchen 4 bis 9 hergestellt ist.

## Claims

1. Composite (45) as an application segment (37) for a semi-finished product (35) of a book-like document (11), wherein the composite has a carrier film (46) and two adhesive layers (43, 44) each is applied to the opposite sides of the carrier film (46), wherein the adhesive layer (43) containing a reactive hot-melt adhesive composition which is enriched with temperature-sensitive, color-changing pigments which, by a color change, indicate that the hot-melt adhesive composition has been heated to its activation temperature, at least in certain regions, wherein either
- the adhesive layer (43), which contains the reactive hot-melt adhesive composition with temperature-sensitive, color-changing pigments, is provided on both sides of the carrier film (46), or
- the carrier film (46) receives on one side the adhesive layer (43) which contains the reactive hot-melt adhesive composition which is enriched with temperature-sensitive, color-changing pigments and receives on the opposite side an adhesive layer (44) which is tacky in the initial state.

2. Composite (45) according to claim 1, **characterized in that** the hot-melt adhesive mass is coloured by the temperature-sensitive pigments and can be changed in color or changes to colourless when the activation temperature of the hot-melt adhesive mass is reached, or **in that** the temperature-sensitive pigments are enriched in the colourless state and change to a color when the activation temperature is reached.

3. Composite (45) according to claim 1 or 2, **characterized in that** the adhesive layer (43, 44) can be detached from the carrier film (46).

4. Method for producing a semi-finished product (35) for a book-like document (11), in which a blank (36) is fed to an application system, wherein a composite (45) has a carrier film (46) and two adhesive layer (43, 44) each is applied to the opposite sides of the carrier film (46), one of them contains a reactive hot-melt adhesive composition which is enriched with temperature-sensitive, color-changing pigments, is fixed to the blank (36) by at least one attachment point (51) or by bonding,
wherein
- the composite (45) is tacked or glued to the blank (36) with adhesive layers (43, 44) provided on both sides of the carrier film (46), and
- wherein either the adhesive layer (43), which contains the reactive hot-melt adhesive composition with temperature-sensitive, color-changing pigments, is provided on both sides of the carrier film (46), or the carrier film (46) receives on one side the adhesive layer (43), which contains the reactive hot-melt adhesive composition enriched with temperature-sensitive, color-changing pigments, and receives on the opposite side an adhesive layer (44) which is tacky in the initial state.

5. Method according to claim 4, **characterized in that** the at least one adhesive layer (43) of the composite (45) is fixed to the blank (36) by one or more dot-shaped, line-shaped and/or dash-line-shaped attachment points (51).

6. Method according to one of claims 4 to 5, **characterized in that** the at least one attachment point (51) is formed by one or more planar attachments.

7. Method according to one of claims 4 to 6, **characterized in that** the composite (45) is cut to the format of the blank (36) or to a sub-size relative to the format of the blank (36) and is tacked or glued individually to the blank (36).

8. Method according to one of claims 4 to 7, **characterized in that** the composite (45) is fed to the at least one blank (36) as a web-like material and is connected to at least one attachment point (51) and is subsequently separated in a cutting and/or punching process.

9. Method according to one of claims 4 to 8, **characterized in that** the blank (36) is provided as a card-shaped blank for a book cover (13, 14) or **in that** the blank (36) is provided as a layer for a multilayer data page (19) or a multilayer personalization data page (21) or an attachment (18) .

10. A semi-finished product for a book-like document produced by a method according to claims 4 to 9.

## Revendications

1. Composite (45) servant de segment d'application (37) pour un produit semi-fini (35) d'un document en forme de livre (11), le composite étant constitué d'une feuille de support (46) et de deux couches adhésives (43, 44) appliquées sur des côtés respectivement opposés de la feuille de support (46), une couche de colle (43) contenant une masse de colle thermofusible réactive, qui est enrichie de pigments sensibles à la température, dont la couleur change, et qui indiquent par un changement de couleur un échauffement au moins partiel de la masse de colle thermofusible à sa température d'activation,
où soit ,
- la couche adhésive (43) est prévue sur les deux faces de la feuille de support (46), laquelle contient la masse réactive de colle thermofusible avec des pigments sensibles à la température et dont la couleur change, ou bien
- la feuille de support (46) reçoit d'un côté la couche adhésive (43) qui contient la masse réactive de colle thermofusible enrichie en pigments sensibles à la température et dont la couleur change, et reçoit de l'autre côté une couche adhésive (44) qui est collante à l'état initial.

2. Composite (45) selon la revendication 1, **caractérisé en ce que** la masse de colle thermofusible est colorée par les pigments sensibles à la température et peut changer de couleur ou devenir incolore lorsque la température d'activation de la masse de colle thermofusible est atteinte, ou **en ce que** les pigments sensibles à la température sont enrichis à l'état incolore et deviennent incolores lorsque la température d'activation est atteinte.

3. Composite (45) selon la revendication 1 ou 2, **caractérisé en ce que** la couche adhésive (43, 44) est détachable du film support (46).

4. Procédé de fabrication d'un produit semi-fini (35) pour un document en forme de livre (11), dans lequel une ébauche (36) est amenée à un système d'application, dans lequel un composite (45) constitué d'une feuille de support (46) et de deux couches adhésives (43, 44, 45) appliquées sur des côtés opposés respectifs de la feuille de support (46) est appliqué sur la feuille de support (46), 44), dont l'une contient une masse réactive de colle thermofusible qui est enrichie de pigments sensibles à la température et dont la couleur change, est fixée par au moins un point d'attache (51) ou par collage à l'ébauche (36),
où
- le composite (45) est fixé ou collé sur l'ébauche (36) par des couches adhésives (43, 44) prévues des deux côtés de la feuille de support (46), et
dans lequel soit
- la couche adhésive (43) est prévue des deux côtés de la feuille de support (46), laquelle contient la masse réactive de colle thermofusible avec des pigments sensibles à la température, dont la couleur change, ou la feuille de support (46) reçoit d'un côté la couche adhésive (43), laquelle contient la masse réactive de colle thermofusible, laquelle est enrichie de pigments sensibles à la température, dont la couleur change, et reçoit du côté opposé une couche adhésive (44), laquelle est collante à l'état initial.

5. Procédé selon la revendication 4, **caractérisé en ce que** la au moins une couche adhésive (43) du composite (45) est fixée par un ou plusieurs points d'agrafage (51) ponctuels, linéaires et/ou en forme de traits par rapport à l'ébauche (36).

6. Procédé selon l'une des revendications 4 à 5, **caractérisé en ce que** ledit au moins un point d'attache (51) est formé par une ou plusieurs attaches planes.

7. Procédé selon l'une des revendications 4 à 6, **caractérisé en ce que** le composite (45) est découpé au format de l'ébauche (36) ou à une dimension inférieure au format de l'ébauche (36) et est agrafé ou collé individuellement sur l'ébauche (36).

8. Procédé selon l'une des revendications 4 à 7, **caractérisé en ce que** le composite (45) est amené sous forme de matériau en bande à l'au moins une ébauche (36) et est relié à au moins un point de fixation (51), puis est individualisé dans un processus de découpe et/ou de poinçonnage.

9. Procédé selon l'une quelconque des revendications 4 à 8, **caractérisé en ce que** l'ébauche (36) est fournie sous la forme d'une ébauche en forme de carte pour une couverture de livre (13, 14) ou **en ce que** l'ébauche (36) est fournie sous la forme d'une couche pour une page de données multicouche (19) ou une page de données de personnalisation multicouche (21) ou une couverture (18).

10. Produit semi-fini pour un document en forme de livre, qui est fabriqué selon un procédé selon les revendications 4 à 9.
